# FASCICULE DE BREVET EUROPEEN

(11) **EP 3 509 881 B1**
(45) Date de publication et mention de la délivrance du brevet: **26.04.2023**
(21) Numéro de dépôt: 17780465.5
(22) Date de dépôt: 05.09.2017
(51) Int. Cl.: B60H 1/24, B60H 1/00

(54) **AGENCEMENT D'UN DISPOSITIF DE VENTILATION DANS UN ENCADREMENT STRUCTUREL DE TOIT ET VÉHICULE COMPORTANT UN TEL AGENCEMENT**
ANORDNUNG EINER LÜFTUNGSVORRICHTUNG IN EINER STRUKTURELLEN DACHEINFASSUNG UND KRAFTFAHRZEUG MIT SOLCH EINER ANORDNUNG
ARRANGEMENT OF A VENTILATION DEVICE IN A STRUCTURAL ROOF SURROUND AND VEHICLE COMPRISING SUCH AN ARRANGEMENT

(30) Priorité: 06.09.2016 FR 1658259; 06.09.2016 FR 1658260
(43) Date de publication de la demande: 17.07.2019
(73) Titulaire: Renault s.a.s, 92100 Boulogne Billancourt (FR)
(72) Inventeur: BEZEAULT, Loic, 78150 Le Chesnay (FR); HEWAK, Gregor, 95490 Vaureal (FR)
(74) Mandataire: Renault Group
(86) Numéro de dépôt international: PCT/FR2017/052341
(87) Numéro de publication internationale: WO 2018/046832

(56) Documents cités:
- DE-U- 1 953 902
- US-A1- 2013 207 420
- US-A1- 2014 113 536

## Description

La présente invention est du domaine des véhicules automobile et concerne de façon générale la génération d'un flux d'air pulsé à proximité d'un élément vitré, notamment un élément vitré pouvant former un toit vitré et une lunette arrière.

Plus particulièrement, l'invention concerne un agencement d'un dispositif de ventilation dans un encadrement structurel de toit, mais aussi un véhicule comportant un tel agencement.

Il est connu des véhicules comportant un élément vitré dont la particularité réside dans l'amélioration du confort des passagers par une augmentation substantielle de la luminosité à l'intérieur de l'habitacle du véhicule. Bien souvent, un tel toit est rapporté sur la structure de caisse du véhicule qui définit un encadrement de toit.

L'élément vitré peut être fixe ou composé de plusieurs parties, l'une pouvant être mobile afin de former un toit ouvrant vitré.

Il a été remarqué une augmentation de la chaleur à l'intérieur de l'habitacle d'un tel véhicule, notamment à proximité du toit vitré, de telle sorte que même avec la présence d'une climatisation, les occupants du véhicule sont dans un espace ayant un différentiel de température élevé entre la zone supérieure de l'habitacle, dite zone chaude, et une zone d'assise, dite zone tempérée, du fait du fonctionnement d'un dispositif de climatisation du véhicule.

Pour s'affranchir de ce problème d'inconfort thermique, les occupants du véhicule ont recours bien souvent à un système d'occultation, qui peut être du type d'un vélum ou d'un store mobile monté à coulissement le long du toit vitré.

Un tel système est remarquable en ce qu'il permet, une fois dans sa position déployée, d'isoler l'habitacle des rayonnements du soleil, réduisant d'autant la montée en température de l'habitacle notamment à proximité du toit.

L'inconvénient d'un tel système d'occultation est toutefois multiple en ce sens qu'il nécessite des moyens dédiés pour le rangement et le déploiement du l'architecture même de certains véhicules, et qu'il prive l'agrément visuel apporté par le élément vitré translucide.

Il est aussi connu du document US2013/207420 un système de diffusion d'air climatisé dans la zone supérieure de l'habitacle.

C'est dans cet environnement que l'objet de l'invention est apparu.

L'objet de l'invention consiste ainsi en un véhicule du type automobile selon la revendication 1, comprenant un agencement d'un dispositif de ventilation dans un encadrement structurel d'un élément vitré d'un véhicule, du type d'une automobile, comportant une structure de caisse sur laquelle est rapporté l'encadrement structurel, la structure de caisse comportant des brancards latéraux de toit s'étendant au prolongement des montants latéraux de pare-brise, lesdits brancards latéraux de toit étant mutuellement reliés l'un à l'autre par l'intermédiaire d'une traverse supérieure de pare-brise et d'une tablette arrière, l'encadrement structurel étant de section creuse.

Selon l'invention, l'agencement du dispositif de ventilation objet de l'invention consiste en ce que l'encadrement structurel est en relation avec le dispositif de ventilation de telle sorte qu'un air pulsé à proximité de l'élément vitré est apte à circuler au travers d'au moins une ouverture de diffusion d'air réalisée sur l'encadrement structurel.

Cela permet de manière avantageusement de créer un rideau d'air le long d'un élément vitré qui tend à améliorer le confort des occupants du véhicule. La circulation d'air ainsi créée permet de s'affranchir d'un dispositif d'occultation par vélum ou volet mobile. Le flux d'air brasé ainsi l'air entre la zone chaude située à proximité du élément vitré et une zone tempérée située au niveau de l'assise des sièges.

L'agencement selon l'invention se caractérise par les caractéristiques
supplémentaires suivantes prises séparément ou en combinaison entre elles :
- le dispositif de ventilation est en relation fluidique avec un système de traitement thermique d'un air d'un habitacle par un circuit d'air traité, le système de traitement thermique comprenant un dispositif de chauffage, de ventilation et/ou de climatisation de telle sorte que ledit air traité est un air chauffé et/ou un air pulsé et/ou un air climatisé, ce qui permet de diffuser un rideau d'air traité air pulsé et/ou un air climatisé, ce qui permet de diffuser un rideau d'air traité thermiquement le long du toit vitré pour améliorer le confort des occupants du véhicule,
- chaque ouverture de diffusion d'air s'étend de manière sensiblement tangente à la surface de l'élément vitré de telle sorte que le flux d'air est pulsé le long de l'élément vitré ; un tel flux d'air est perçu comme un flux d'air indirect à diffusion large, ce qui améliore le confort des occupants.
- le dispositif de ventilation comprend au moins un moto-ventilateur avec une ouverture d'entrée d'air reliée à un dispositif collecteur d'air comportant au moins un conduit d'aspiration d'air dont une extrémité libre débouche à proximité d'une zone inférieure de la structure de caisse ; cela permet de puiser un air tempéré et de le distribuer dans une zone chaude située à proximité du toit vitré, créant ainsi une réduction du différentiel de température qui est propice au confort des occupants du véhicule.
- au moins un conduit d'aspiration d'air est disposé sur un plancher arrière de la structure de caisse sur laquelle au moins un siège arrière est apte à être fixé, de telle sorte que le dispositif collecteur d'air s'étend verticalement entre le plancher arrière et le siège arrière ; Le dispositif de ventilation est alors aisément intégré au mobilier intérieur du véhicule.
- le plancher arrière de la structure de caisse comprend au moins une paroi approximativement verticale hors de laquelle débouche en saillie une extrémité libre d'un conduit d'aspiration d'air formant une ouverture d'aspiration ; Les entrées d'air sont situées dans une zone du véhicule qui est susceptible de recevoir un air tempéré par un dispositif de climatisation.
- le dispositif collecteur d'air comprend plusieurs conduits d'aspiration d'air reliés entre eux par au moins une boîte de jonction. Cela permet une collecte en plusieurs points d'un air qui sera par la suite pulsé par le dispositif de ventilation au travers des orifices de diffusion d'air de l'encadrement structurel de l'élément vitré.
- le dispositif de ventilation comprend un dispositif de diffusion d'air relié au moto-ventilateur par au moins une ouverture de sortie d'air, le dispositif de diffusion d'air comprend au moins un conduit d'acheminement d'air pourvu d'au moins un aérateur s'étendant en saillie hors de l'ouverture de diffusion d'air de l'encadrement structurel. Un tel conduit d'acheminement d'air est remarquable en ce que, contrairement à l'encadrement structurel dont la section est calibrée pour assurer une tenue à la déformation du véhicule, qu'il permet par une section variable de maintenir un débit d'air constant quelle que soit l'ouverture de diffusion d'air.
- l'aérateur est disposé dans un logement dédié de la tablette arrière, chaque logement étant une échancrure réalisée sur un bord arrière de la tablette arrière contre lequel l'encadrement structurel d'au moins un élément vitré vient en appui par superposition. Cela permet une architecture particulière du véhicule, notamment un élément vitré dont le bord arrière est disposé contre une tablette arrière. Ainsi la partie vitrée du véhicule comprend le pare-brise prolongé longitudinalement par un élément vitré qui s'étend jusqu'au niveau d'une jonction entre une tablette arrière et un couvercle de coffre arrière. Le véhicule peut ainsi être une berline à quatre portes équipée d'un toit intégral vitré, optionnellement avec une partie mobile s'étendant au regard de la rangée de sièges avant, et formant toit ouvrant.
- l'ouverture de diffusion d'air s'étend le long d'une portion latérale de l'encadrement structurel de l'élément vitré, au niveau d'un bord latéral intérieur de ladite portion latérale, la portion latérale s'étendant entre une traverse intermédiaire et une traverse arrière, la traverse intermédiaire de l'encadrement structurel de l'élément vitré reliant entre eux des pieds milieux délimitant des encadrements de portes latérales, la traverse arrière venant à recouvrement de la tablette arrière de la structure de caisse. L'élément vitré peut être une pièce réalisée d'un seul tenant afin de créer à la fois le toit vitré et la lunette arrière du véhicule.
- le moto-ventilateur est fixé sur une doublure de passage de roue de la structure de caisse, le moto-ventilateur étant disposé entre la doublure de passage de roue et un élément de garniture intérieure de coffre. Cela permet un agencement de chaque moto-ventilateur dans le compartiment de coffre.

L'objet de l'invention a aussi trait à un véhicule, du type d'une automobile, comportant un dispositif de ventilation, un encadrement structurel d'un élément vitré, une structure de caisse sur laquelle est rapporté l'encadrement structurel, la structure de caisse comportant des brancards latéraux de toit s'étendant au prolongement des montants latéraux de pare-brise, lesdits brancards latéraux de toit étant mutuellement reliés l'un à l'autre par l'encadrement structurel et au moins par une tablette arrière, l'encadrement structurel étant de section creuse. Le véhicule comprend un dispositif de ventilation conforme à l'agencement susmentionné.

L'encadrement structurel est lié solidairement à un élément vitré fixe s'étendant entre les traverses intermédiaire et arrière de l'encadrement structurel, le dispositif de ventilation permettant de diffuser des flux d'air le long de la face intérieure de l'élément vitré formant un toit et une lunette arrière. Avantageusement, l'élément vitré est une pièce réalisée d'un seul tenant.

Le véhicule est remarquable en ce que le dispositif de ventilation comprend des aérateurs disposés le long ou à l'extrémité d'un conduit d'acheminement d'air.

Le dispositif de ventilation peut comprendre plusieurs aérateurs et les conduits d'acheminement peuvent être de sections transversales variables afin de diffuser un air ayant un débit homogène au travers de chacun des aérateurs du dispositif de ventilation. Une telle conception permet avantageusement d'obtenir un débit d'air identique quelle que soit l'ouverture de diffusion d'air au travers de laquelle circule le flux d'air.

D'autres particularités et avantages de l'invention ressortiront à la lecture de la description faite ci-après d'un mode de réalisation particulier de l'invention, donné à titre indicatif mais non limitatif, en référence aux figures annexées dans lesquelles :
- la figure 1 est une vue en perspective d'un encadrement structurel de l'élément vitré comprenant en partie un dispositif de ventilation, selon l'invention;
- la figure 2 représente en perspective une structure de caisse sur laquelle l'encadrement structurel de l'élément vitré de la figure 1 est destiné à être agencé,
- la figure 3 représente en perspective d'un encadrement structurel de l'élément vitré agencé sur la structure de caisse de la figure 2, selon l'invention,
- la figure 4 est une vue schématique d'une variante de réalisation d'un dispositif de ventilation comprenant un dispositif de diffusion d'air destiné à être agencé à l'intérieur d'un encadrement structurel de l'élément vitré selon l'invention,
- la figure 5 est une représentation en perspective d'un dispositif collecteur d'air appartenant au dispositif de ventilation,
- la figure 6 est une représentation en perspective partielle d'une partie arrière de caisse, plus particulièrement un agrandissement d'un moto-ventilateur appartenant au dispositif de ventilation de l'invention, et de garniture intérieure de coffre destinée à venir à recouvrement d'un passage de roue contre lequel le moto-ventilateur est agencé, selon l'invention,
- la figure 7 est une représentation en perspective d'un agencement du dispositif collecteur d'air sur la structure de caisse, selon l'invention,
- la figure 8 est une représentation d'une variante de réalisation du système de traitement thermique d'un air d'un habitacle délimité en partie supérieure par un encadrement structurel d'un élément de toit et/ou de lunette arrière, selon l'invention,
- la figure 9 représente selon une vue en perspective, une partie du système de traitement thermique de l'air de la figure 8,
- la figure 10 est une vue en perspective d'un dispositif de diffusion d'air destiné à être agencé dans un encadrement structurel d'un élément de toit et/ou de lunette arrière, selon la variante de réalisation de l'invention,
- la figure 11 est une représentation en perspective d'une partie arrière gauche de l'encadrement structurel d'un élément de toit et/ou de lunette arrière vue de l'intérieur du véhicule, l'encadrement comprenant une grille linéaire de diffusion d'air, selon la variante de réalisation de l'invention,
- la figure 12 est une représentation en perspective d'une partie arrière droite de l'encadrement structurel d'un élément de toit et/ou de lunette arrière vue de l'intérieur du véhicule, l'encadrement comprenant une grille linéaire de diffusion , selon une autre variante de réalisation de l'invention.

La description qui suit est faite en référence à un trièdre X, Y et Z associé classiquement à un véhicule automobile, dans lequel X est la direction longitudinale avant-arrière du véhicule dirigée vers l'arrière, Y est la direction transversale droite-gauche au véhicule, qui est horizontale et perpendiculaire à X, dirigée vers la droite, et Z est la direction verticale dirigée vers le dessus. Par ailleurs les termes « avant », « arrière », « droit », « gauche », « horizontal », « vertical », supérieur » et « inférieur » sont relatifs au véhicule ou à une partie de celui-ci et sont définis par rapport au sens de déplacement du véhicule.

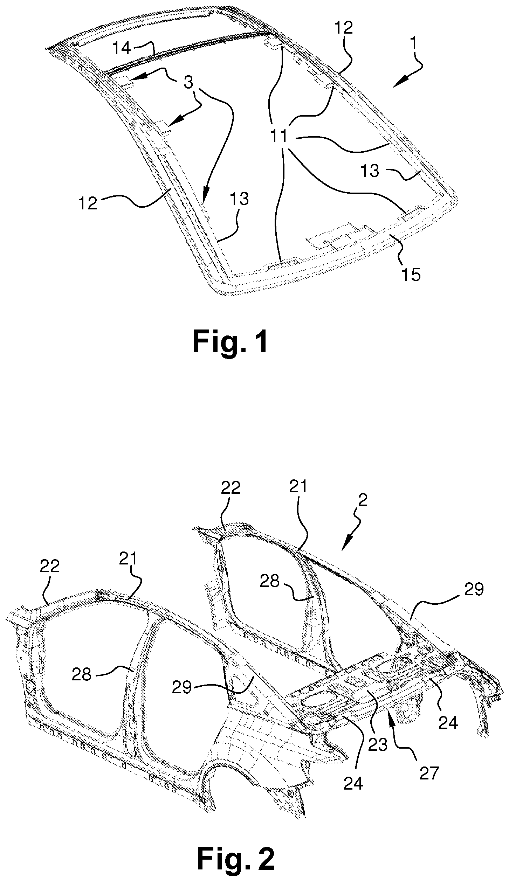

En référence aux figures 1 et 2, un véhicule comprend une structure de caisse 2 et un encadrement structurel 1 sur lequel peut être rapporté par l'extérieur un élément vitré formant d'un seul tenant, un toit vitré et une lunette arrière vitrée.

L'encadrement structurel 1 de l'élément vitré peut être réalisé dans un matériau composite, par exemple à partir d'un plastique chargé en fibres de verre.

L'encadrement structurel 1 de l'élément vitré comprend des portions longitudinales 12, chacune réalisée d'un seul tenant, reliées mutuellement l'une à l'autre par au moins des poutres transversales, par exemple par au moins deux traverses.

Dans le cas d'un élément vitré comprenant une pièce unique, l'encadrement structurel 1 peut comprendre une traverse avant et une traverse arrière 15. La traverse avant de l'encadrement structurel 1 est conformée pour coopérer avec une traverse supérieure de pare-brise réalisée par la structure de caisse. La traverse arrière 15 de l'encadrement structurel 1 est conformée pour coopérer avec une tablette arrière 23 contre laquelle la lunette arrière, réalisée par l'élément vitré, est destinée à venir en appui.

La traverse arrière 15 de l'encadrement structurel 1 est apte à venir à recouvrement de la tablette arrière 23 de la structure 2 de caisse.

La traverse arrière 15 peut être collée à la tablette arrière 23.

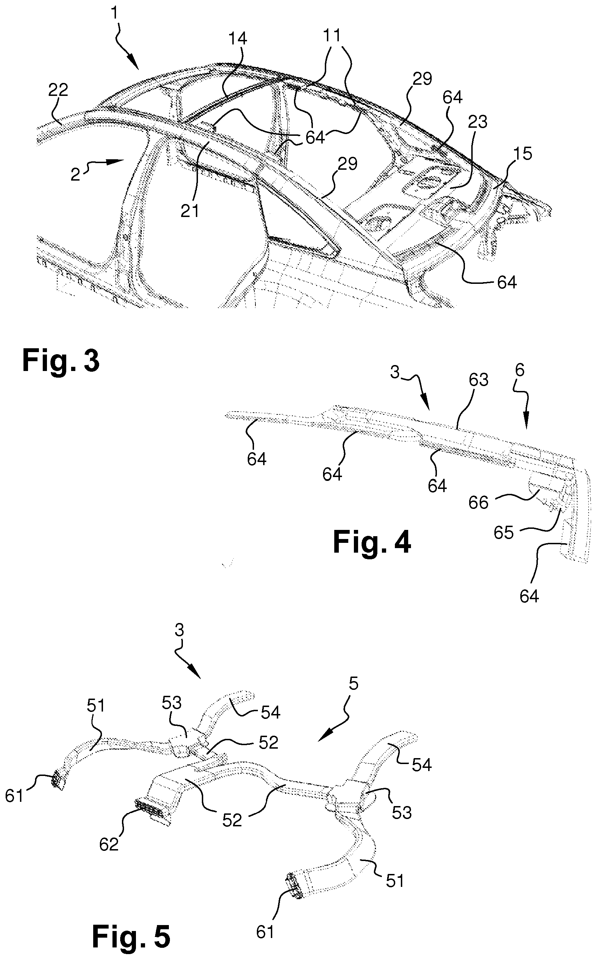

Dans le cas de la variante de réalisation des figures 1 et 3, l'encadrement structurel 1 comprend en plus une traverse intermédiaire 14 de telle sorte que les traverses avant et intermédiaire 14 délimitent les bords longitudinaux contre lesquels un toit ouvrant est apte à venir en appui dans sa position de fermeture. Les portions longitudinales 12 de l'encadrement structurel 1 sont alors conformées afin de recevoir des rails de guidage rendant apte le coulissement du toit ouvrant ventre ses positions de fermeture et d'ouverture.

Le toit ouvrant peut être vitré.

Comme cela est rendu visible à la figure 2, le véhicule comprend de chaque côté deux portes d'accès à l'habitacle. La structure 2 de caisse comprend de manière traditionnelle des côtés latéraux de caisse définissant des pieds avant, milieu 28 et arrière définissant par paires des encadrements de portes latérales avant et arrière.

La structure de caisse 2 comprend notamment les montants latéraux de pare-brise 22, les brancards de toit 21, les doublures de custodes 29 et la tablette arrière 23.

Les côtés de caisse sont reliés l'un à l'autre par une tablette arrière 23 s'étendant sensiblement dans un plan X-Y. Les bords latéraux de la tablette arrière 23 sont conformés par complémentarité de forme aux doublures de custode latérale appartenant aux côtés de caisse.

Compte tenu de la présence de l'encadrement structurel 1 de toit, les arches de pavillon, aussi qualifiées de brancard de toit, formées par la partie sommitale des côtés de caisse, ont respectivement une section transversale réduite par rapport aux conceptions traditionnelles. Il en va de même de la traverse supérieure de pare-brise qui forme avec la traverse avant de l'encadrement structurel 1, une poutre de section creuse.

L'encadrement structurel 1 est rapporté sur la structure 2 de caisse par le dessus de telle sorte que la traverse intermédiaire 14 vient s'étendre au prolongement des pieds milieux 28 afin de les relier transversalement l'un à l'autre.

Lorsque l'encadrement structurel 1 est assemblé à la structure 2 de caisse, les portions latérales 12 s'étendent longitudinalement au prolongement vers l'arrière des montants latéraux 22 de pare-brise, mais aussi verticalement au-dessus des brancards 21 latéraux. Les extrémités arrière des portions latérales 12 de toit s'étendent approximativement au droit de la tablette arrière 23.

Chacun des brancards 21 latéraux de la structure de caisse relie longitudinalement un montant latéral 22 de pare-brise à une doublure de custode arrière 29 de sorte que l'encadrement structurel 1 est disposé à recouvrement de la doublure de custode arrière 29.

Le bord supérieur de la doublure de custode arrière 29 est incliné par rapport à la tablette arrière 23 de telle manière que les doublures de custode arrière 29 et la tablette arrière 23 sont au moins jointives par leur bord d'extrémité longitudinale arrière.

L'encadrement structurel 1 est réalisé par des pièces obtenues par moulage, préférentiellement par des demi-coquilles qui sont de section sensiblement en U et assemblées par superposition l'une sur l'autre afin de former au moins un corps creux.

Un dispositif de ventilation 3 est porté en partie par l'encadrement structurel 1. Comme cela est rendu visible sur la figure 1, les portions latérales 12 de l'encadrement structurel 1 comprennent des ouvertures 11 de diffusion d'air au travers desquelles s'étendent des aérateurs 64. La traverse arrière 15 peut également comprendre des ouvertures 11 de diffusion d'air. A cet effet, le bord arrière 27 de la tablette 23 arrière comprend des logements 24 destinés chacun à coopérer par complémentarité de forme avec un aérateur 64 de diffusion d'air faisant saillie hors des ouvertures 11 ménagées dans l'encadrement structurel 1.

Chaque logement 24 peut être une échancrure réalisée sur un bord arrière 27 de la tablette 23 arrière contre lequel l'encadrement structurel 1 vient en appui par superposition de la traverse arrière 15.

La traverse arrière 15 de l'encadrement forme une traverse inférieure de lunette arrière.

Les parties de l'élément vitré s'étendant transversalement au droit des encadrements de porte est un toit vitré.

La partie de l'élément vitré s'étendant transversalement au droit de la doublure de custode est une lunette arrière vitrée.

A titre d'exemple, l'encadrement structurel 1 comprend sur une partie des portions 12 latérales située entre les traverses intermédiaire 14 et arrière 15, trois ouvertures 11 dans lesquelles sont disposées des aérateurs 64.

Préférentiellement les aérateurs 64 se font face par paires afin de créer des flux d'air ventilé croisés au niveau de la zone chaude de l'élément vitré.

Les ouvertures 11 de diffusion d'air peuvent être réalisées sur un bord latéral intérieur de l'encadrement structurel 1.

Les aérateurs 64 peuvent aussi être disposés selon un décalage en X, formant ainsi un agencement en quinconce, afin de créer des écoulements d'air parallèles et opposés. Ainsi le flux d'air sortant d'un aérateur 64 de l'une des portions latérales 12 est dirigé selon un sens d'écoulement opposé par rapport à un flux d'air sortant d'un aérateur 64 de l'autre des portions latérales 12 qui lui est directement adjacent selon un axe X.

Afin de créer la circulation d'air, selon un premier mode de réalisation, les ouvertures 11 de diffusion d'air sont en communication fluidique avec un dispositif de ventilation 3 qui sera décrit plus en détails par la suite.

Dans un mode de réalisation de l'invention, le flux d'air circule directement au travers des portions latérales 12 et la traverse arrière 15 de l'encadrement structurel 1 qui définit alors des conduits d'écoulement d'un flux d'air le long desquels les aérateurs 64 de diffusion d'air sont agencés.

Selon une variante de réalisation, le dispositif de ventilation 3 comprend un dispositif de diffusion 6 d'air qui est réalisé par au moins un conduit d'acheminement 63 d'air. Le conduit d'acheminement d'air 63 est avantageusement disposé à l'intérieur de l'encadrement structurel 1.

A titre d'exemple, le conduit d'acheminement d'air 63 est positionné sur l'une des coquilles formant l'encadrement structurel 1 avant que l'autre des coquilles soit rapportée. Le conduit d'acheminement d'air 63 est ainsi interposé entre les coquilles formant l'encadrement structurel 1.

Le conduit d'acheminement 63 a une section transversale évolutive afin de garantir un débit d'air identique pour chaque aérateur 64.

Le conduit d'acheminement 63 d'air de la figure 4 est sensiblement de section longitudinale en L, en ce sens qu'il comprend une branche principale et une branche secondaire approximativement perpendiculaire l'une de l'autre. La branche principale est destinée à s'étendre à l'intérieur de la traverse arrière 15 de l'encadrement structurel 1, tandis que la branche secondaire est destinée à s'étendre à l'intérieur d'une des portions latérales 12.

L'extrémité libre de la branche secondaire peut comprendre un aérateur 64.

Les aérateurs 64 de la branche principale sont répartis de manière homogène le long de cette dernière.

Une bride d'entrée d'air 65 est disposée à la jonction des branches principale et secondaire.

Selon une variante de réalisation, le dispositif de ventilation peut comprendre qu'un seul moto-ventilateur.

Selon une variante de réalisation, le conduit d'acheminement 63 est sensiblement de forme en U et s'étend à la fois dans les portions latérales 12 et la traverse arrière 15 de l'encadrement structurel 1.

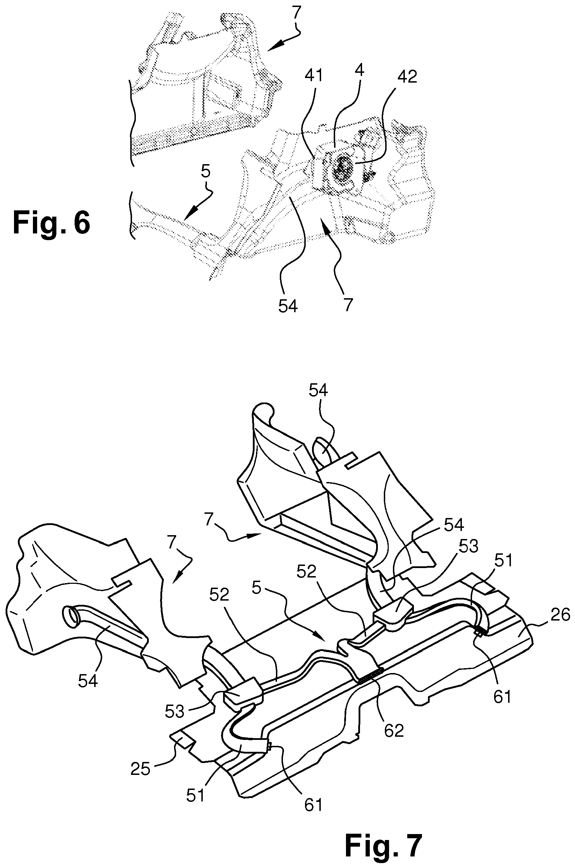

Une platine de fixation 66 est disposée au niveau de la bride d'entrée d'air 65 afin de permettre une fixation du dispositif de diffusion 6 d'air sur un moto-ventilateur 4, lequel est rendu visible à la figure 6.

Le moto-ventilateur 4 est fixé à un passage de roue arrière et recouvert d'une garniture 7 intérieure de coffre.

Le moto-ventilateur 4 peut être de type d'un moto-ventilateur radial dont la volute comprend un orifice de sortie d'air qui est assemblé jointivement à la bride d'entrée d'air 65. L'entrée d'air aspiré par le moto-ventilateur 4 est axiale à l'axe de la turbine du ventilateur. L'entrée d'air du moto-ventilateur 4 est reliée à un dispositif collecteur d'air 5 qui peut comprendre au moins un conduit d'aspiration, notamment un conduit d'aspiration principale 54 dont l'une des extrémités comprend une interface de fixation à l'entrée d'air du moto-ventilateur 4, par exemple du type d'une bride de fixation adaptée à l'entrée d'air du moto-ventilateur 4.

Le dispositif collecteur d'air 5 s'étend principalement au niveau d'une zone inférieure de la structure 2 de caisse.

Selon un mode de réalisation préféré, le dispositif collecteur d'air 5 comprend des conduits d'aspiration secondaires latéraux 51 et central 52 d'air disposés sur un plancher arrière 25 du véhicule, lequel permet de fixer au moins un siège arrière. De manière avantageuse, le dispositif collecteur d'air 5 est alors interposé entre au moins l'un des sièges arrière et le plancher arrière 23, ce qui en facilite son intégration dans le véhicule.

De manière plus particulière, le plancher arrière 25 peut comprendre une paroi 26 approximativement verticale conformée pour délimiter en partie une cave à pied ou une cloison de liaison à un tunnel de servitude.

La paroi 26 comprend un bord supérieur délimité par une ligne de pliure s'étendant transversalement le long du plancher arrière 25. Des extrémités libres 61, 62 des conduits d'aspiration secondaires latéraux 51 et central 52 débouchent à proximité de la ligne de pliure du plancher arrière 25, à la jonction de la paroi 26. Les extrémités libres des conduits d'aspiration secondaires latéraux 51 et centraux 52 peuvent comprendre des moyens de filtration, par exemple des grilles ou filtres.

Selon une conception particulière, l'extrémité libre 62 du conduit d'aspiration central 52 est disposée au droit du tunnel de servitude tandis que les extrémités libres 61 des conduits d'aspiration secondaires latéraux 51 sont disposées chacune au droit d'une cave à pieds, respectivement en saillie hors du plancher arrière 25.

L'extrémité libre 62 est un orifice d'entrée d'air qui peut s'étendre au regard d'un aérateur de sortie d'air d'un dispositif de climatisation de l'air. Les frigories obtenues par la mise en fonctionnement du dispositif de climatisation de l'air peuvent alors être récupérées en partie par le dispositif de ventilation afin de rafraichir la partie supérieure de l'habitacle du véhicule qui est délimitée par un élément vitré translucide.

La cave à pied peut être une zone du plancher dans laquelle débouche une sortie d'air d'un dispositif de climatisation de l'air. Les frigories obtenues par la mise en fonctionnement du dispositif de climatisation de l'air peuvent alors être récupérées en partie par le dispositif de ventilation afin de rafraichir la partie supérieure de l'habitacle du véhicule qui est délimitée par un élément vitré translucide.

Le dispositif collecteur d'air 5 peut comprendre au moins une boîte 53 de jonction qui permet de créer une mise en relation fluidique des conduits d'aspiration principal 54, secondaires central 52 et latéral 51.

Le conduit d'aspiration secondaire central 52 comprend une portion commune d'extrémité qui se sépare en deux sous-portions, chacune étant reliée à une boîte 53 de jonction.

Ainsi, lorsque l'un des moto-ventilateurs 4 est mis en l'état de fonctionnement, un flux d'air pulsé circule dans l'encadrement structurel 1 avant d'être diffusé de manière sensiblement tangente à la surface du toit vitré. L'air pulsé est aspiré au travers des conduits d'aspiration principal 54, secondaires central 52 et latéral 51.

La circulation de l'air au travers de l'encadrement structurel 1 s'effectue de manière directe ou indirecte, selon l'absence ou la présence d'un dispositif de diffusion 6 d'air.

Afin de faciliter l'intégration du dispositif collecteur d'air 5, les conduits 51, 52 et 54 peuvent être de section rectangulaire.

Préférentiellement, le dispositif de ventilation 3 comprend deux moto-ventilateurs 4 qui sont logés chacun entre une garniture 7 intérieure de coffre et un passage de roue.

Les moto-ventilateurs sont reliés à une unité de contrôle (non représentée) qui en permet un fonctionnement en simultané ou séparé des moto-ventilateurs 4 selon une consigne de fonctionnement émise manuellement par utilisateur du véhicule ou automatiquement par un système de contrôle et de gestion de la température dans l'habitacle.

Avantageusement, toute la surface intérieure du élément vitré est balayée par un flux d'air, ce qui réduit significativement le ressenti de chaleur pour les occupants du véhicule.

L'encadrement structurel 1 peut être une pièce structurelle commune à plusieurs véhicule en ce sens qu'elle est apte à recevoir au moins un élément vitré mais aussi un toit en tôle.

Une grille de liaison (non représentée) peut aussi être utilisée afin de recouvrir au moins plusieurs aérateurs 64 afin de créer un guide d'air sensiblement linéaire qui peut s'étendre sur quasi-totalité de la longueur de l'encadrement structurel 1.

Bien entendu, l'agencement des différents éléments constitutifs du dispositif de ventilation 3 a été décrit en relation avec une structure de caisse 2 d'un véhicule automobile, du type d'une berline.

Quand bien le véhicule décrit précédemment est une berline à quatre portes, l'invention concerne tout type de véhicule équipé d'un encadrement structurel d'un élément vitré, ce dernier étant de type fixe et/ou mobile.

L'invention peut aussi concerner tout type de véhicule équipé d'un encadrement structurel destiné à recevoir en partie un élément tôlé.

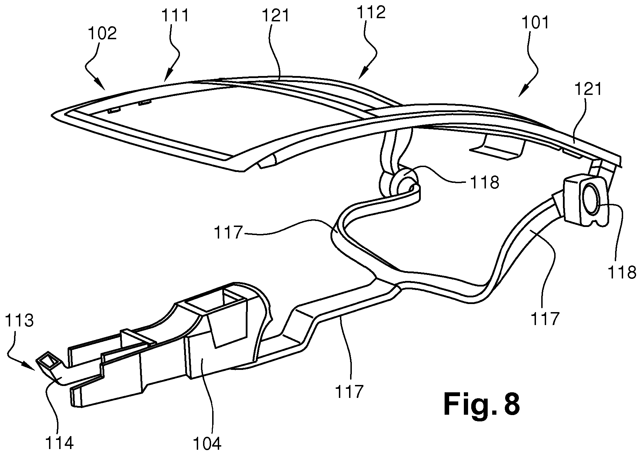

Une variante de réalisation du système de traitement thermique d'un air d'un habitacle est représentée sur les figures 8 à 12. L'habitacle représenté est délimité en sa partie supérieure notamment par un toit porté par un encadrement structurel 102.

L'encadrement structurel 102 est conformée afin de venir sur un cadre délimité par la structure de caisse du véhicule. Ce cadre comprend des traverses reliant les brancards latéraux. La structure de caisse est réalisée en acier.

L'encadrement structurel 102 peut être réalisé en matériau composite par exemple à partir d'un plastique chargé en fibres de verre.

L'encadrement structurel 102 est destiné à recevoir au moins un élément de toit et/ou de lunette arrière.

L'encadrement structurel 102 peut recevoir un élément de toit mobile formant un toit ouvrant. Dans ce but, l'encadrement structurel comprend des poutres qui délimitent un cadre avant en périphérie duquel l'élément de toit mobile est apte à venir en appui dans une configuration de fermeture.

L'encadrement structurel 102 peut aussi recevoir un élément de toit fixe s'étendant longitudinalement jusqu'à une traverse arrière.

L'élément de toit peut être réalisé en verre ou à partir de tout autre matériau translucide, comme par exemple du polycarbonate.

L'encadrement structurel 102 peut aussi recevoir une vitre arrière, formant la lunette arrière.

Selon le mode de réalisation préféré, l'encadrement structurel 102 comprend des poutres latérales 121 qui s'étendent chacune longitudinalement au prolongement d'un montant latéral de baie, verticalement au-dessus d'au moins un encadrement 122 de porte latérale, et verticalement au-dessus d'une vitre de custode arrière 123. L'extrémité arrière de l'encadrement structurel 102 coopère alors avec une traverse arrière formée notamment par une tablette arrière 124 de liaison de doublures latérales de custodes arrière 123.

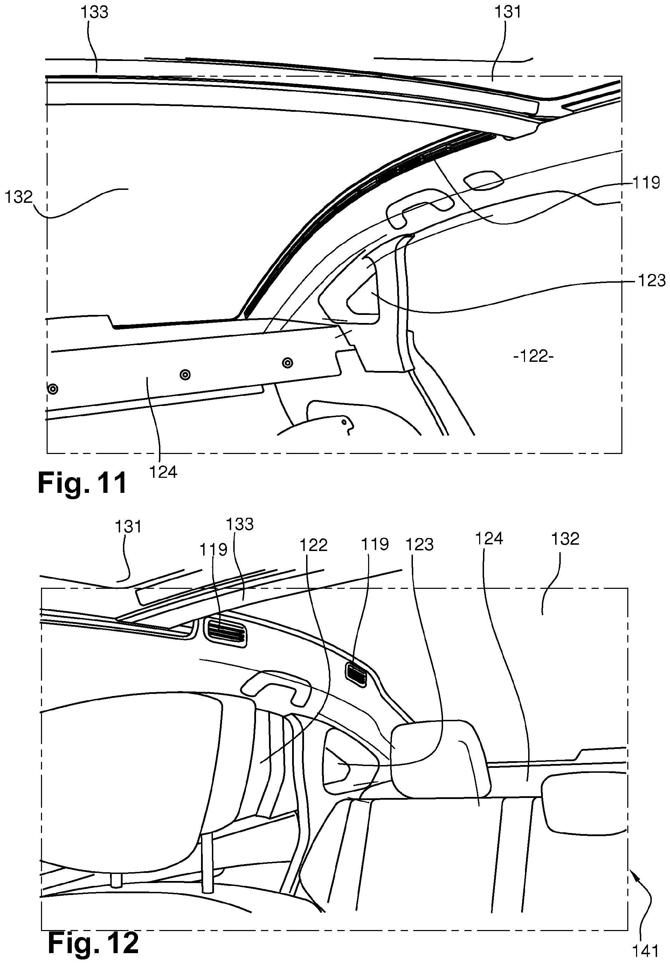

Dans le mode de réalisation des figures 11 et 12, une partie sommitale du toit transparent est prolongée vers l'arrière de telle sorte que le galbe donné à l'unique pièce translucide permet de réaliser un élément 132 de toit et de lunette arrière. L'encadrement structurel 102 délimite alors aussi un cadre formant un support périphérique d'un élément de toit et de lunette arrière.

Sur ces mêmes figures, une poutre transversale 133 de l'encadrement structurel 102 est une traverse d'axe Y commune au cadre avant recevant un toit mobile 131 et au cadre arrière recevant l'élément 132 de toit et de lunette arrière.

L'encadrement structurel 102 est en outre remarquable en ce qu'il comprend en partie un système de traitement thermique d'un air d'un habitacle qui va être décrit plus en détails dans ce qui suit.

L'encadrement structurel 102 est de préférence réalisé selon un assemblage d'une coquille supérieure avec une coquille inférieure, chacune de section en U ou L, de telle sorte qu'une fois la superposition des coquilles, l'encadrement structurel 102 délimite au moins un anneau de rigidification qui est de section creuse.

Préférentiellement, l'encadrement structurel 102 comprend un anneau de rigidification avant 111 qui est destiné à porter un panneau avant de toit, notamment un panneau avant mobile. L'encadrement structurel 102 comprend en outre un anneau de rigidification arrière 112 qui est destiné à porter un élément 132 de toit et de lunette arrière. Les anneaux de rigidification avant et arrière 111, 112 sont disposés de manière adjacente l'un à l'autre, et sont chacun de forme sensiblement parallélépipédique de telle sorte que la poutre transversale 133 est une pièce commune qui appartient à la fois aux anneaux de rigidification avant et arrière.

Chacun des anneaux de rigidification 111 et 112 est creux de sorte que le système de traitement thermique peut être en partie logé à l'intérieur de l'encadrement structurel 102.

Le système de traitement de l'air comprend un circuit 113 d'air traité qui peut s'étendre en aval d'un dispositif de chauffage, de ventilation et/ou de refroidissement.

Préférentiellement, un tel dispositif comprend un boitier disposé sous la planche de bord du véhicule, le boîtier comportant un radiateur relié au circuit de refroidissement du moteur, un moto-ventilateur dont la mise en fonctionnement génère un air pulsé, ainsi qu'un évaporateur permettant de refroidir l'air le traversant.

Un tel dispositif comprend en outre des volets de mixage d'air et des volets de répartition d'air qui permettent de diriger l'air vers différentes sorties d'air munies par exemple d'aérateurs pouvant être logés au niveau de la planche de bord du véhicule.

Le circuit d'air traité 113 peut comprendre au moins un conduit principal 114 qui forme un moyen d'acheminement de l'air entre le dispositif de chauffage, de ventilation et/ou de refroidissement et au moins un aérateur 115.

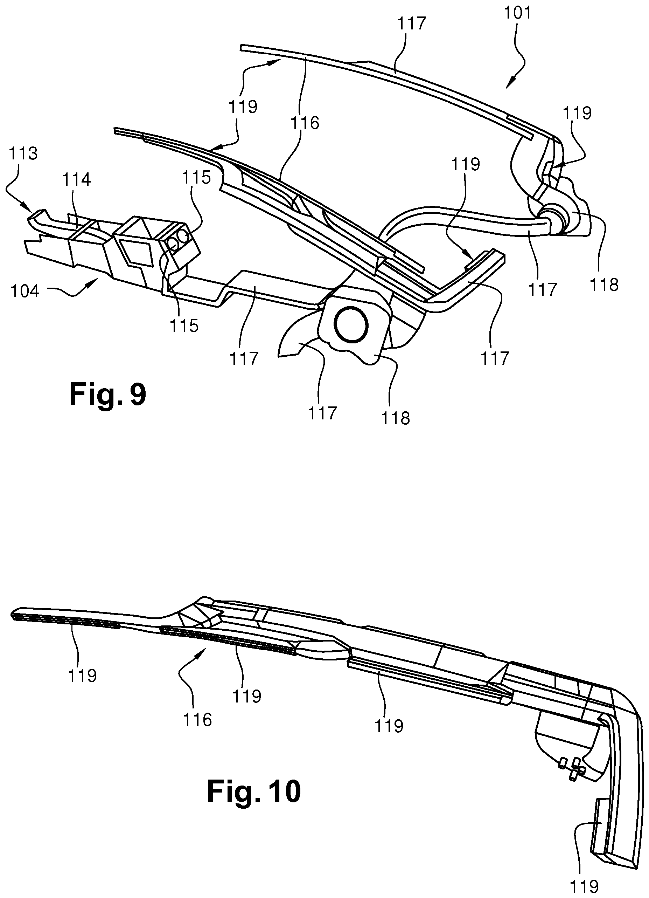

Sur les figures 8 et 9, l'un des conduits principaux 114 est disposé à l'intérieur d'une console centrale 104 qui est conformée afin de s'étendre longitudinalement entre les sièges d'une rangée avant de sièges non représentée.

L'extrémité arrière de la console centrale 104 est munie de deux aérateurs 115 qui sont destinés à s'étendre au-dessus d'un tunnel de servitude réalisé dans le plancher du véhicule. Les aérateurs 115 sont destinés à diriger un flux d'air vers les sièges d'une rangée arrière 141 de sièges qui est rendue visible sur la figure 12.

Selon une variante de réalisation non représentée, le conduit principal 114 est formé par le boîtier logeant le dispositif de chauffage, de ventilation et/ou de refroidissement.

Préférentiellement, le système de traitement thermique de l'air comprend au moins un conduit secondaire 117 qui est agencé en partie à l'intérieur de l'encadrement structurel 102.

L'encadrement structurel 102 est ainsi alimenté en air traité par l'intermédiaire dudit conduit secondaire 117 qui est relié au conduit principal 114 d'air.

Pour ce faire, le conduit secondaire 117 comprend une extrémité qui est reliée au conduit principal 114.

Le conduit principal 114 peut comprendre à cet effet une ouverture permettant de relier le conduit secondaire 117.

Le conduit principal 114 peut comprend une pièce d'interconnexion assurant la liaison avec le conduit secondaire 117. Dans le cas d'une disposition d'une telle pièce d'interconnexion (non représentée) au niveau d'une extrémité du conduit principal 114, une telle pièce d'interconnexion assure également la fixation des aérateurs 115 arrière.

Les aérateurs 115 peuvent aussi comprendre une ouverture dédié à la jonction avec le conduit secondaire 117.

Dans le cas d'un conduit principal 114 réalisé par le boîtier du dispositif de chauffage, de ventilation et/ou de refroidissement, ce dernier peut comprend une ouverture de sortie dédiée à sa jonction avec le conduit secondaire 117.

L'encadrement structurel 102 peut comprendre des ouvertures ménagées au niveau du bord latéral intérieur de la poutre de section creuse délimitant une portion latérale de l'anneau de rigidification 112.

Préférentiellement, le conduit secondaire 117 comprend un dispositif de diffusion 116 d'air qui permet avantageusement de créer une diffusion large et homogène de l'air traité en sortie de l'encadrement structurel 102.

Le dispositif de diffusion 116 d'air peut être une pièce issue de moulage, de section creuse variable afin d'obtenir au niveau de chacune de ces sorties 119 un débit d'air déterminé.

Les sorties 119 peuvent être assemblées à une grille de diffusion d'air s'étendant linéairement le long de l'encadrement structurel 102 de telle sorte qu'au flux d'air puisse être dirigé de manière sensiblement parallèle à l'élément 132 de toit et/ou de lunette arrière.

Compte tenu de l'effet thermique obtenu par la diffusion d'un tel flux d'air léchant la face intérieure de l'élément 132 de toit et/ou de lunette arrière, le système de traitement de l'air de l'habitacle selon l'invention peut être qualifié de rideau d'air.

L'air traité issu du dispositif de chauffage, de ventilation et/ou de climatisation est pulsé au travers de chacun des conduits secondaires 117 au moyen d'un ventilateur 118 auxiliaire.

Selon le mode préféré de réalisation, le conduit secondaire 117 comprend une branche principale reliée à deux branches secondaires. La branche principale est reliée au conduit principal 114 et chacune des branches secondaires coopère avec l'anneau de rigidification 112 constituant en partie l'encadrement structurel 102. Chaque branche secondaire est destinée à alimenter en air une portion latérale et arrière de l'encadrement structurel 102. Les branches principale et secondaires de la conduit secondaire 117 forment un Y.

Le conduit secondaire 117 comprend un ventilateur 118 auxiliaire, à titre d'exemple intégré au niveau de chacune des branches secondaires. Une telle conception permet avantageusement de réduire la taille du moto-ventilateur, ce qui en facilite leur intégration dans le véhicule. Ici, le ventilateur 118 auxiliaire est disposé entre un passage de roue et une garniture de compartiment arrière, pouvant être un coffre. Cela peut également permettre un pilotage séparé de chacun d'entre eux.

Le flux d'air traité est d'abord pulsé par le ventilateur principal, puis est ainsi pulsé par chacun des ventilateurs auxiliaires fonctionnant alors respectivement en série avec le ventilateur principal.

Alternativement, le ventilateur 118 auxiliaire peut fonctionner séparément du ventilateur principal. Il peut ainsi être possible de commander la mise en fonctionnement d'un ventilateur auxiliaire durant la mise en arrêt du ventilateur principal, afin de réaliser uniquement une ventilation dans l'habitacle.

Avantageusement, le conduit secondaire 117 s'étend sur le plancher du véhicule, localement sous les sièges de la rangée arrière 141 de sièges. Il peut également s'étendre sur le tunnel de servitude formé dans le plancher du véhicule. Il peut également s'étendre contre un passage de roue arrière formé par le côté de caisse.

Le véhicule comprenant un tel système 101 de traitement thermique de l'air permet de créer un rideau d'air directement au niveau de l'élément de toit et de lunette arrière, ce qui tend à améliorer le confort des occupants.

Il est par conséquent rendu possible d'augmenter très significativement la luminosité à bord d'un véhicule avec un confort accru d'un point de vue thermique.

Quand bien même le véhicule décrit précédemment comporte deux rangées de sièges, le système 101 de traitement thermique trouve aussi une application dans un véhicule à une rangée de sièges surplombée par un élément vitré unique du type d'un élément de toit et de lunette arrière.

Un tel véhicule équipé du système 101 de traitement de l'air est remarquable en ce qu'il permet de s'affranchir d'une intégration complexe d'un mécanisme d'occultation par store ou vélum.

## Revendications

1. Véhicule, du type d'une automobile, comprenant un dispositif de ventilation (3) agencé dans un encadrement structurel (1, 102) d'au moins un élément vitré, le véhicule comportant une structure (2) de caisse sur laquelle est rapporté l'encadrement structurel (1, 102), la structure (2) de caisse comportant des brancards (21) latéraux de toit s'étendant au prolongement des montants latéraux (22) de pare-brise, lesdits brancards latéraux (21) de toit étant mutuellement reliés l'un à l'autre par l'intermédiaire d'une traverse supérieure de pare-brise et d'une tablette arrière (23), l'encadrement structurel (1) étant de section creuse, **caractérisé en ce que** l'encadrement structurel (1) est en relation avec le dispositif de ventilation (3) de telle sorte qu'un air pulsé à proximité de l'élément vitré est apte à circuler au travers d'au moins une ouverture (11) de diffusion d'air réalisée sur l'encadrement structurel (1) et **en ce que** l'encadrement structurel (1, 102) a une section calibrée pour assurer une tenue à la déformation du véhicule et comprend des portions longitudinales (12), chacune réalisée d'un seul tenant, reliées mutuellement l'une à l'autre par au moins des poutres transversales, par exemple par au moins deux traverses.

2. Véhicule selon la revendication 1, **caractérisé en ce que** le dispositif de ventilation est en relation fluidique avec un système (101) de traitement thermique d'un air d'un habitacle par un circuit (113) d'air traité, le système (101) de traitement thermique comprenant un dispositif de chauffage, de ventilation et/ou de climatisation de telle sorte que ledit air traité est un air chauffé et/ou un air pulsé et/ou un air climatisé.

3. Véhicule selon la revendication 1 ou 2, **caractérisé en ce que** chaque ouverture (11) de diffusion d'air s'étend de manière sensiblement tangente à la surface de l'élément vitré.

4. Véhicule selon l'une des revendications 1 à 3, **caractérisé en ce que** le dispositif de ventilation (3) comprend au moins un moto-ventilateur (4) avec une ouverture d'entrée (41) d'air reliée à un dispositif collecteur d'air (5) comportant au moins un conduit d'aspiration (51, 52) d'air dont une extrémité libre (61, 62) débouche à proximité d'une zone inférieure de la structure (2) de caisse.

5. Véhicule selon la revendication 4, **caractérisé en ce qu'**au moins un conduit d'aspiration (51, 52, 54) d'air est disposé sur un plancher arrière (25) de la structure (2) de caisse sur laquelle au moins un siège arrière est apte à être fixé, de telle sorte que le dispositif collecteur d'air (5) s'étend verticalement entre le plancher arrière (23) et le siège arrière.

6. Véhicule selon la revendication 4 ou 5, **caractérisé en ce que** le plancher arrière (25) de la structure (2) de caisse comprend au moins une paroi (26) approximativement verticale hors de laquelle débouche en saillie une extrémité (61, 62) libre d'un conduit d'aspiration (51, 52) d'air formant une ouverture d'aspiration.

7. Véhicule selon l'une des revendications 4 à 6, caractérisé en que le dispositif collecteur d'air (5) comprend plusieurs conduits d'aspiration d'air (51, 52, 54) reliés entre eux par au moins une boîte (53) de jonction.

8. Véhicule selon l'une quelconque des revendications 4 à 7, **caractérisé en ce que** le dispositif (3) de ventilation comprend un dispositif de diffusion (6) d'air relié au moto-ventilateur (4) par au moins une ouverture de sortie (42) d'air, le dispositif de diffusion (6) d'air comprend au moins un conduit d'acheminement (63) d'air pourvu d'au moins un aérateur (64) s'étendant en saillie hors de l'ouverture (11) de diffusion d'air de l'encadrement structurel (1).

9. Véhicule selon la revendication précédente, **caractérisé en ce que** l'aérateur (64) est disposé dans un logement (24) dédié de la tablette arrière (23), chaque logement (24) étant une échancrure réalisée sur un bord arrière (27) de la tablette (23) arrière contre lequel l'encadrement structurel (1) d'au moins un élément vient en appui par superposition.

10. Véhicule selon la revendication 8 ou 9, **caractérisé en ce que** l'ouverture (11) de diffusion d'air s'étend le long d'une portion latérale (12) de l'encadrement structurel (1), au niveau d'un bord latéral intérieur (13) de ladite portion latérale, la portion latérale (12) s'étendant entre une traverse intermédiaire (14) et une traverse arrière (15), la traverse intermédiaire (14) reliant entre eux des pieds milieux (28) délimitant des encadrements de portes latérales, la traverse arrière (15) venant à recouvrement de la tablette arrière (23) de la structure (2) de caisse.

11. Véhicule selon l'une quelconque des revendications 4 à 10, **caractérisé en ce que** le moto-ventilateur (4) est fixé sur une doublure de passage de roue de la structure (2) de caisse, le moto-ventilateur (4) étant disposé entre la doublure de passage de roue et un élément de garniture intérieure (7) de coffre.

12. Véhicule selon l'une quelconque des revendications 1 à 10, **caractérisé en ce que** l'encadrement structurel (1) est lié solidairement à un élément vitré fixe s'étendant entre les traverses intermédiaire (14) et arrière (15) de l'encadrement structurel (1), le dispositif de ventilation (3) permettant de diffuser des flux d'air le long de la face intérieure de l'élément vitré formant un toit et une lunette arrière.

13. Véhicule selon l'une quelconque des revendications 1 à 11, **caractérisé en ce que** le dispositif de ventilation (3) comprend au moins un aérateur (64) disposé le long ou à l'extrémité d'un conduit d'acheminement (63) d'air.

## Patentansprüche

1. Fahrzeug von der Art eines Automobils, umfassend eine Lüftungsvorrichtung (3), die in einem strukturellen Rahmen (1, 102) mindestens eines Glaselements angeordnet ist, wobei das Fahrzeug eine Karosseriestruktur (2) aufweist, an der der strukturelle Rahmen (1, 102) angebracht ist, wobei die Karosseriestruktur (2) seitliche Dachträger (21) aufweist, die sich in der Verlängerung von Seitenpfosten (22) der Windschutzscheibe erstrecken, wobei die seitlichen Dachträger (21) über einen oberen Querträger der Windschutzscheibe und eine hintere Platte (23) miteinander verbunden sind, wobei der strukturelle Rahmen (1) einen hohlen Querschnitt aufweist, **dadurch gekennzeichnet, dass** der strukturelle Rahmen (1) so mit der Lüftungsvorrichtung (3) in Beziehung steht, dass eine gepulste Luft in der Nähe des Glaselements durch mindestens eine am strukturellen Rahmen (1) ausgebildete Luftdiffusionsöffnung (11) strömen kann, und dadurch, dass der strukturelle Rahmen (1, 102) einen kalibrierten Querschnitt aufweist, um eine Formbeständigkeit des Fahrzeugs zu gewährleisten, und Längsabschnitte (12) umfasst, die jeweils einstückig ausgebildet und zumindest durch Querträger, beispielsweise durch mindestens zwei Querträger, miteinander verbunden sind.

2. Fahrzeug nach Anspruch 1, **dadurch gekennzeichnet, dass** die Lüftungsvorrichtung über einen Kreislauf (113) für aufbereitete Luft mit einem System (101) zur Wärmebehandlung einer Luft eines Fahrgastraums in Fluidverbindung steht, wobei das Wärmebehandlungssystem (101) eine Heizungs-, Lüftungs- und/oder Klimatisierungsvorrichtung umfasst, sodass die aufbereitete Luft eine erwärmte Luft und/oder eine gepulste Luft und/oder eine klimatisierte Luft ist.

3. Fahrzeug nach Anspruch 1 oder 2, **dadurch gekennzeichnet, dass** sich jede Luftdiffusionsöffnung (11) im Wesentlichen tangential zur Oberfläche des Glaselements erstreckt.

4. Fahrzeug nach einem der Ansprüche 1 bis 3, **dadurch gekennzeichnet, dass** die Lüftungsvorrichtung (3) mindestens einen Lüftersatz (4) mit einer Lufteinlassöffnung (41) umfasst, die mit einer Luftsammelvorrichtung (5) verbunden ist, die mindestens eine Luftansaugleitung (51, 52) umfasst, deren freies Ende (61, 62) in der Nähe eines unteren Bereichs der Karosseriestruktur (2) mündet.

5. Fahrzeug nach Anspruch 4, **dadurch gekennzeichnet, dass** mindestens eine Luftansaugleitung (51, 52, 54) auf einem hinteren Boden (25) der Karosseriestruktur (2), an der mindestens ein Rücksitz befestigbar ist, angeordnet ist, so dass sich die Luftsammelvorrichtung (5) vertikal zwischen dem hinteren Boden (*23*) und dem Rücksitz erstreckt.

6. Fahrzeug nach Anspruch 4 oder 5, **dadurch gekennzeichnet, dass** der hintere Boden (25) der Karosseriestruktur (2) mindestens eine annähernd vertikale Wand (26) umfasst, aus der ein freies Ende (61, 62) einer Luftansaugleitung (51, 52), das eine Ansaugöffnung bildet, vorstehend mündet.

7. Fahrzeug nach einem der Ansprüche 4 bis 6, **dadurch gekennzeichnet, dass** die Luftsammelvorrichtung (5) mehrere Luftansaugleitungen (51, 52, 54) umfasst, die durch mindestens einen Verbindungskasten (53) miteinander verbunden sind.

8. Fahrzeug nach einem der Ansprüche 4 bis 7, **dadurch gekennzeichnet, dass** die Lüftungsvorrichtung (3) eine Luftdiffusionsvorrichtung (6) umfasst, die über mindestens eine Luftaustrittsöffnung (42) mit dem Lüftersatz (4) verbunden ist, wobei die Luftdiffusionsvorrichtung (6) mindestens eine Luftführungsleitung (63) umfasst, die mit mindestens einem Lüfter (64) versehen ist, der sich von der Luftdiffusionsöffnung (11) des strukturellen Rahmens (1) vorstehend erstreckt.

9. Fahrzeug nach dem vorangehenden Anspruch, **dadurch gekennzeichnet, dass** der Lüfter (64) in einer dedizieren Aufnahme (24) der hinteren Platte (23) angeordnet ist, wobei jede Aufnahme (24) eine an einer hinteren Kante (27) der hinteren Platte (23) ausgeführte Aussparung ist, gegen die der strukturelle Rahmen (1) mindestens eines Elements durch Überlagerung zur Anlage kommt.

10. Fahrzeug nach Anspruch 8 oder 9, **dadurch gekennzeichnet, dass** sich die Luftdiffusionsöffnung (11) entlang eines Seitenabschnitts (12) des strukturellen Rahmens (1) im Bereich einer inneren Seitenkante (13) des Seitenabschnitts erstreckt, wobei sich der Seitenabschnitt (12) zwischen einem Zwischenquerträger (14) und einem hinteren Querträger (15) erstreckt, wobei der Zwischenquerträger (14) Mittelfüße (28), die Seitentürrahmen begrenzen, miteinander verbindet, wobei der hintere Querträger (15) die hintere Platte (23) der Karosseriestruktur (2) überdeckt.

11. Fahrzeug nach einem der Ansprüche 4 bis 10, **dadurch gekennzeichnet, dass** der Lüftersatz (4) an einem Radkastenfutter der Karosseriestruktur (2) befestigt ist, wobei der Lüftersatz (4) zwischen dem Radkastenfutter und einem Innenverkleidungselement (7) des Kofferraums angeordnet ist.

12. Fahrzeug nach einem der Ansprüche 1 bis 10, **dadurch gekennzeichnet, dass** der strukturelle Rahmen (1) fest mit einem festen Glaselement verbunden ist, das sich zwischen dem Zwischenquerträger (14) und dem hinteren Querträger (15) des strukturellen Rahmens (1) erstreckt, wobei die Lüftungsvorrichtung (3) es ermöglicht, Luftströme entlang der Innenseite des Glaselements zu verteilen, das ein Dach und eine Heckscheibe bildet.

13. Fahrzeug nach einem der Ansprüche 1 bis 11, **dadurch gekennzeichnet, dass** die Lüftungsvorrichtung (3) mindestens einen Lüfter (64) umfasst, der entlang oder am Ende einer Luftführungsleitung (63) angeordnet ist.

## Claims

1. Vehicle of the motor vehicle type, comprising a ventilation device (3) arranged in a structural surround (1, 102) of at least one glazed element, the vehicle comprising a bodyshell structure (2) to which the structural surround (1, 102) is attached, the bodyshell structure (2) comprising roof side rails (21) extending in the continuation of the windscreen side uprights (22), said roof side rails (21) being mutually connected to one another via a windscreen top rail and via a rear parcel shelf (23), the structural surround (1) being of hollow cross section, **characterized in that** the structural surround (1) is in communication with the ventilation device (3) so that air blown near the glazed element is able to circulate through at least one air distribution opening (11) produced on the structural surround (1), and **in that** the structural surround (1, 102) has a calibrated cross section in order to ensure resistance to the deformation of the vehicle and comprises longitudinal portions (12), each produced in a single piece, which are mutually connected to one another by at least transverse beams, for example by at least two crossmembers.

2. Vehicle according to Claim 1, **characterized in that** the ventilation device is in fluidic communication with a heat treatment system (101) for air in a passenger compartment via a treated air circuit (113), the heat treatment system (101) comprising a heating, ventilation and/or air conditioning device, such that said treated air is heated air and/or blown air and/or air-conditioned air.

3. Vehicle according to Claim 1 or 2, **characterized in that** each air distribution opening (11) extends substantially tangentially to the surface of the glazed element.

4. Vehicle according to one of Claims 1 to 3, **characterized in that** the ventilation device (3) comprises at least one motorized fan (4) with an air inlet opening (41) connected to an air manifold device (5) comprising at least one air suction conduit (51, 52), a free end (61, 62) thereof opening into the vicinity of a lower zone of the bodyshell structure (2).

5. Vehicle according to Claim 4, **characterized in that** at least one air suction conduit (51, 52, 54) is arranged on a rear floor (25) of the bodyshell structure (2), at least one rear seat being capable of being fixed to said bodyshell structure, such that the air manifold device (5) extends vertically between the rear floor (23) and the rear seat.

6. Vehicle according to Claim 4 or 5, **characterized in that** the rear floor (25) of the bodyshell structure (2) comprises at least one approximately vertical wall (26), a free end (61, 62) of an air suction conduit (51, 52) forming a suction opening discharging out of said wall in a protruding manner.

7. Vehicle according to one of Claims 4 to 6, **characterized in that** the air manifold device (5) comprises a plurality of air suction conduits (51, 52, 54) which are connected to one another by at least one junction box (53).

8. Vehicle according to any one of Claims 4 to 7, **characterized in that** the ventilation device (3) comprises an air distribution device (6) which is connected to the motorized fan (4) by at least one air outlet opening (42), and the air distribution device (6) comprises at least one air conveying conduit (63) provided with at least one air vent (64) protruding out of the air distribution opening (11) of the structural surround (1).

9. Vehicle according to the preceding claim, **characterized in that** the air vent (64) is arranged in a dedicated housing (24) of the rear parcel shelf (23), each housing (24) being a notch produced on a rear edge (27) of the rear parcel shelf (23), the structural surround (1) of at least one element bearing against said rear edge by superposition.

10. Vehicle according to Claim 8 or 9, **characterized in that** the air distribution opening (11) extends along a side portion (12) of the structural surround (1), in the region of an internal side edge (13) of said side portion, the side portion (12) extending between an intermediate crossmember (14) and a rear crossmember (15), the intermediate crossmember (14) connecting centre pillar structures (28) delimiting side door surrounds to one another, the rear crossmember (15) covering the rear parcel shelf (23) of the bodyshell structure (2).

11. Vehicle according to any one of Claims 4 to 10, **characterized in that** the motorized fan (4) is fixed to a wheel housing trim of the bodyshell structure (2), the motorized fan (4) being arranged between the wheel housing trim and an internal boot lining element (7).

12. Vehicle according to any one of Claims 1 to 10, **characterized in that** the structural surround (1) is fixedly connected to a fixed glazed element extending between the intermediate (14) and rear (15) crossmembers of the structural surround (1), the ventilation device (3) enabling the air flows to be distributed along the internal face of the glazed element forming a roof and a rear window.

13. Vehicle according to any one of Claims 1 to 11, **characterized in that** the ventilation device (3) comprises at least one air vent (64) arranged along or at the end of an air conveying conduit (63).
